# EUROPEAN PATENT SPECIFICATION

(11) **EP 2 942 944 B1**
(45) Date of publication and mention of the grant of the patent: **08.03.2017**
(21) Application number: 15166434.9
(22) Date of filing: 05.05.2015
(51) Int. Cl.: H04N 5/64, G06F 3/14, G06F 3/0482

(54) **DISPLAY APPARATUS AND METHOD FOR ALIGNING THEREOF**
ANZEIGEVORRICHTUNG UND VERFAHREN ZUR AUSRICHTUNG DAVON
APPAREIL D'AFFICHAGE ET SON PROCÉDÉ D'ALIGNEMENT

(30) Priority: 07.05.2014 KR 20140054284
(43) Date of publication of application: 11.11.2015
(73) Proprietor: Samsung Electronics Co., Ltd, Gyeonggi-do 443-742 (KR)
(72) Inventor: Kim, Seung-min, Gyeonggi-do (KR); Na, Jeong-shan, Gyeonggi-do (KR)
(74) Representative: Appleyard Lees IP LLP

(56) References cited:
- WO-A1-2011/099999
- US-A1- 2012 007 990
- US-A1- 2013 046 505

## Description

### CROSS-REFERENCE TO RELATED APPLICATION

This application claims priority from Korean Patent Application No. 10-2014-0054284, filed on May 7, 2014, in the Korean Intellectual Property Office.

### BACKGROUND

### 1. Field

Methods and apparatuses consistent with exemplary embodiments relate to a display apparatus and a method for aligning the display apparatus, and more particularly, a display apparatus capable of being supported by a holder and correcting a gradient using an external sensor or a built-in sensor, and a method for aligning thereof.

### 2. Description of Related Art

In the digital signage field, a video wall display apparatus may provide marketing, advertising and bring a client experience to a user through a large screen which is arrayed in an M X N matrix. The video wall may be installed in a public place, such as an airport, a hotel, an exhibition center and the like.

In the case of a video wall arrayed in a 10 X 6 matrix, a display apparatus is built up from the first line and supported by a wall mount or a stand with a connecting member. The weight of the display apparatus increases according to an enlargement of the display apparatus, so that it is not easy to install the display apparatus. If a misalignment occurs in the third line of the display apparatus piled in a 10 X 6 matrix, a distortion of displayed content and light leakage may occur. In this case, the top three rows of the display apparatus must be disassembled, and then installed again.

An example of the background art is shown in US2012/0007990, which discloses television display leveling using a leveling module that forms part of the television.

### SUMMARY

One or more exemplary embodiments may overcome the above disadvantages. According to the present invention there is provided an apparatus and method as set forth in the appended claims. Other features of the invention will be apparent from the dependent claims, and the description which follows. An aspect of the present disclosure provides a display apparatus capable of correcting a gradient to prevent a misalignment and a method for aligning thereof.

The present disclosure is not limited hereto, and according to various exemplary embodiments, a display apparatus which is supported by a holder and corrects a gradient using a sensor of an external apparatus or a built-in sensor and a method for aligning the display apparatus may be provided.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG 1. is a perspective view illustrating a plurality of display apparatuses according to an exemplary embodiment;
FIG. 2. is a block diagram illustrating a plurality of display apparatuses according to an exemplary embodiment;
FIG. 3 is a flowchart illustrating a method for arranging a display apparatus according to an exemplary embodiment; and
FIG. 4A to 4I are views illustrating exemplary methods for aligning a display apparatus according to one or more exemplary embodiments.

### DETAILED DESCRIPTION OF EXEMPLARY EMBODIMENTS

Hereinafter, exemplary embodiments are described in greater detail with reference to the accompanying drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions may not be described in detail since they would obscure the exemplary embodiments with unnecessary detail.

Although the terms first, second, etc. may be used herein to describe various elements, these elements should not be limited by these terms. These terms are only used to distinguish one element from another element. The terminology used herein is for the purpose of describing particular exemplary embodiments only, and is not intended to be limiting. The terminologies are used to differentiate one exemplary embodiment from another exemplary embodiment. For example, the first exemplary embodiment may be called the second exemplary embodiment, and the second exemplary embodiment also may be called the first exemplary embodiment without affecting the scope of the claims. The terms "and/or" includes a combination of a plurality of related items or an item among a plurality of related items. "Contents" may include broadcasting, a video, an image, a text and/or a web document. Expressions such as "at least one of," when preceding a list of elements, modify the entire list of elements and do not modify the individual elements of the list.

The term "user input" includes, for example, an input through a key of a remote controller, a user voice received through a microphone, and an input through a user motion received through a camera and/or an input through a key of a panel key. For example, the term "user" may be used to indicate an owner, a user, or an installation engineer who mounts a display apparatus.

Exemplary embodiments of the present disclosure will now be illustrated and explained in detail, but the present disclosure is not limited to the described exemplary embodiments. Also, the description of exemplary embodiments of the present disclosure is intended to be illustrative. It will be further understood that the terms "comprises" and/or "comprising" when used in this specification, specify the presence of stated features, integers, steps, operations, elements, and/or components, but does not preclude the presence or addition of one or more other features, integers, steps, operations, elements, components, and/or groups thereof. In the following description, the like drawing reference numerals are used for the same or similar elements, even in different drawings.

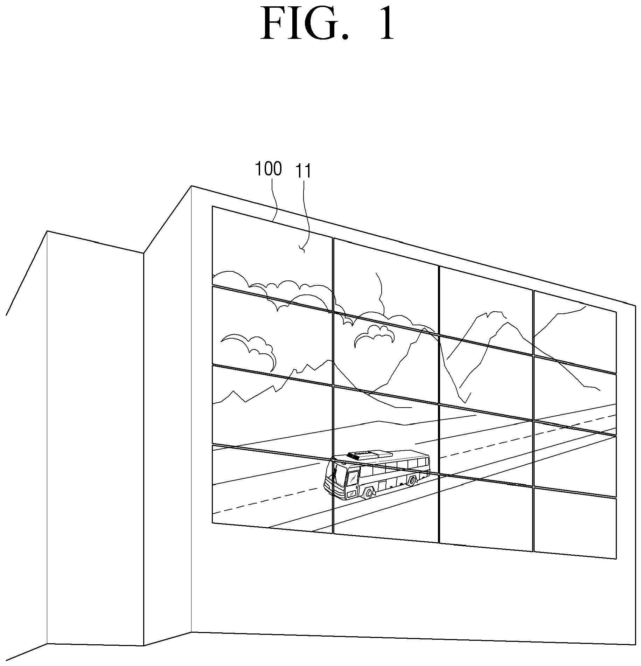

FIG. 1 is a front view illustrating a display apparatus according to an exemplary embodiment.

Referring to FIG. 1, a plurality of display apparatuses 100 are realized as a video wall, and are arrayed in a 4 X 4 matrix. The video wall may recognize a plurality of display apparatuses 100 as a single screen, and enlarge and display a content in a 1 X 1 matrix, a 2 X 2 matrix, an M X N matrix (herein, m and n are positive integers). A plurality of display apparatuses 100 may be mounted to a wall by a wall mount 50. Also, a plurality of display apparatuses 100 may be supported by a stand.

One or more sides among four sides of a front cover of a display apparatus arrayed in an M X N matrix may contact a side among four sides of a front cover of another display apparatus. When the display apparatus 100 which is arrayed in an M X N matrix is not aligned with another display apparatus 100 (for example, a gap or a difference between display apparatuses), a content displayed on a screen 11 may be distorted.

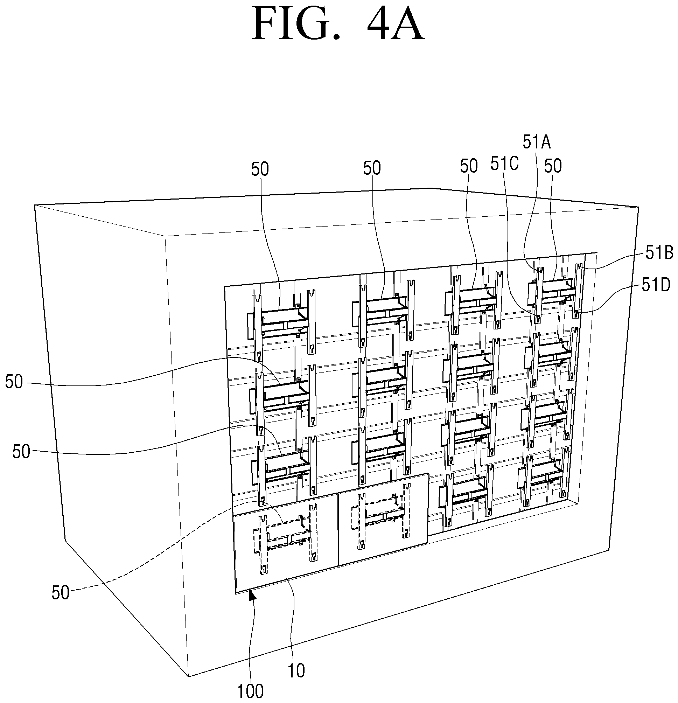

Each display apparatus 100 includes a main body 10 and a wall mount 50 (see FIG. 4A) which mounts the main body 10 on a wall. The display apparatus 100 may include the main body 10 and a stand which supports the main body 10 on the ground. The holder may be used as a term which includes the wall mount 50 and the stand. Also, the display apparatus 100 may include the main body 10 without the wall mount 50 and the stand.

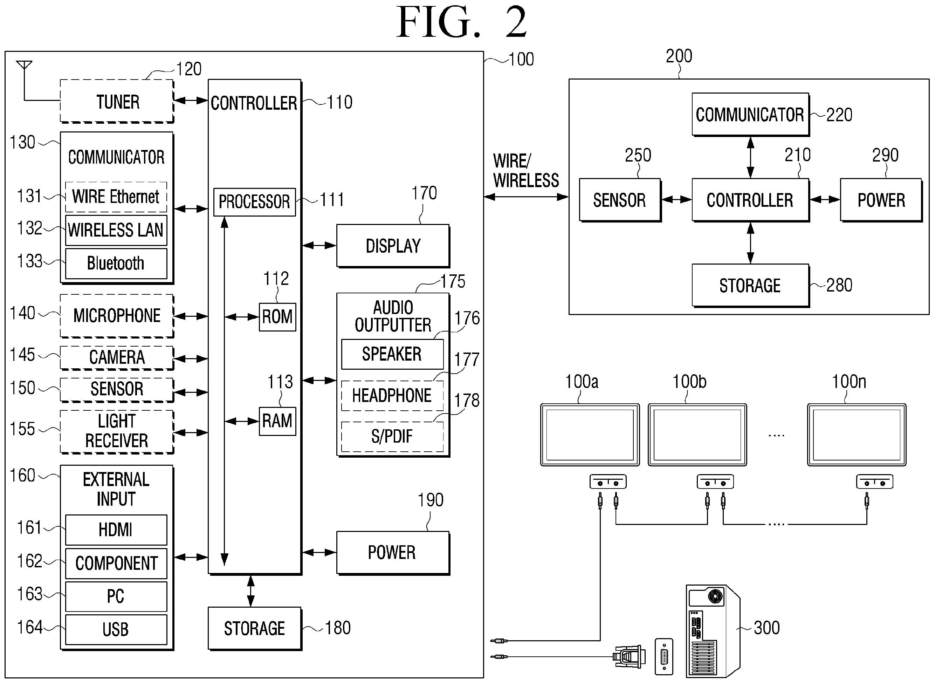

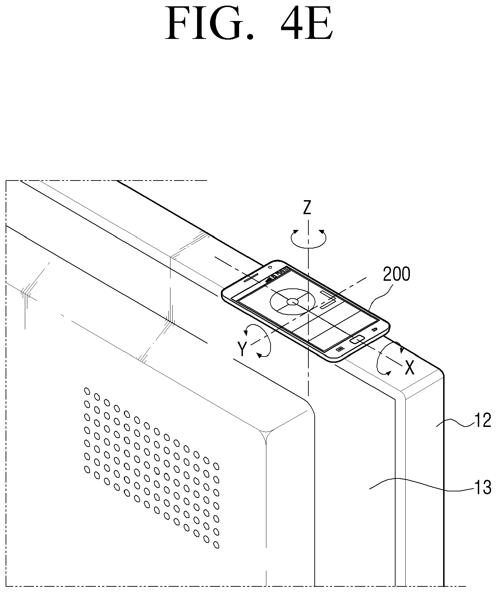

The main body 10 includes a display 170 (see FIG. 2), a front cover 12 (see FIG. 4E), a back cover 13 (see FIG. 4E). A display panel 11 also may be called a screen.

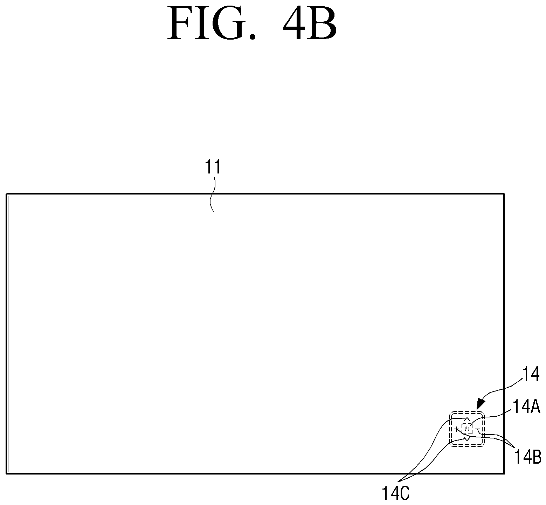

The front cover 12 may include a light window which receives a light (for example, an infrared light) output from an external remote controller. The back cover 13 may be connected to a stand 50. As shown in FIG. 4B, the back cover 13 may include a panel key 14 including a power key 14A, a volume key 14B, and a channel key 14C. The panel key 14 may further include a TV/external input key or a menu key.

The display apparatus 100 may analyze a light received through the light window 12A and control an operation of the display apparatus 100.

The display apparatus 100 may analyze an image signal (for example, a user motion) received through a camera 145 (see FIG. 2), and control an operation of the display apparatus 100.

The display apparatus 100 may analyze a voice signal (for example, a user voice) received through a microphone 140 (see FIG. 2), and control an operation of the display apparatus 100. For example, the display apparatus 100 may be controlled based on a received light, a received image signal or a received voice, and may perform various operations, such as executing an internet search, a character input, and reproduction of a stored content. The display apparatus 100 may also run an application to control a power control (on/off), a volume control, a channel control, a mute, an external input control and a communicator.

When a remote controller 200 and the display apparatus 100 are connected by wireless communication, such as a Bluetooth communicator 130 (see FIG. 2), an element, such as the light window, may be omitted from the display apparatus 100.

FIG. 2 is a block diagram illustrating a display apparatus according to an exemplary embodiment.

Referring to FIG. 2, the display apparatus 100, 100a, 100b, ... 100n may be connected to an external apparatus over a wired or wireless connection by a control of a controller 110 using the communicator 130 or an external input 160. An external apparatus may include another display apparatus, a portable device 200 (for example, a cellular phone, a smart phone, a sensor capable of communication, and the like), a computer 300, a tablet PC, and a server.

The display apparatus 100 may include the communicator 130, a sensor 150, the external input 160, a display 170, au audio outputter 175, a storage and a power source 190. Also, the display apparatus 100 may further include a tuner 120, a microphone 140, and a camera 145. The display apparatus 100 including the display 170 may be electrically connected to an external apparatus including a tuner.

The display apparatus 100 may further include a sensor 150 (for example, an acceleration sensor, a motion sensor, a gyro sensor, a temperature sensor, and the like) which detects an internal or external condition of the display apparatus 100.

The display apparatus 100 may be realized as, but is not limited to, an analog TV, a digital TV, a 3D-TV, a smart TV, an LED TV, an OLED TV, a plasma TV, a monitor, a curved TV with a screen of a fixed curvature, a flexible TV with a screen of a fixed curvature, a bended TV with a screen of a fixed curvature, and/or a curvature variable TV where a curvature of a current screen is variable by a received user input.

A controller may include a processor 111, a ROM 112 where a control program for controlling the display apparatus 100 is stored, and a RAM 113 which stores a signal or data input from outside of the display apparatus 100 or is used as a storage area corresponding to various operations performed in the display apparatus 100.

The controller controls an overall operation of the display apparatus and a signal flow among internal elements 120 to 190 of the display apparatus, and performs a function of processing data. The controller controls power which is provided to the internal elements 120 to 180 from the power source 190. Also, when there is a user input or a condition which is predetermined and stored is satisfied, the controller may execute an operation system (OS) stored in a storage and various applications.

The processor 111 may include a graphic processor for a graphic process corresponding to a picture or an image. A core and a graphic processor (GPU) of the processor 111 may be realized as a system on chip (SoC). The processor 111 may include a single core, a dual core, a triple core, a quad core or a multiple core thereof.

The processor 111 may include a plurality of processors, for example, a main processor and a sub processor which operates in a sleep mode. The controller 110 may include a graphic processing board which is a separate circuit board electrically connected to the controller 110. The graphic processing board may include a graphic processor, a RAM, and/or a ROM. Also, the processor 111, the ROM 112, and the RAM 113 may be mutually connected via an internal bus.

The term "controller" may include the processor 111, the ROM 112, and the RAM 113 in an exemplary embodiment.

According to an exemplary embodiment, when power is supplied to the display apparatus which is supported by a holder, the controller may display a control menu on a screen, request the first gradient information from a portable apparatus in response to a user input input to the control menu, and display a gradient baseline along with a calculated gradient line on the screen of the display apparatus which is supported by the holder. The portable apparatus may be placed on a front cover of the display apparatus and detect the first gradient corresponding to the first gradient information of the portable apparatus.

According to an exemplary embodiment, with respect to displaying the gradient baseline and the calculated gradient line, the controller may calculate the second gradient of the display apparatus using the first gradient information, and calculate an angle between the gradient baseline of the display apparatus and the calculated gradient line using the calculated second gradient.

According to an exemplary embodiment, with respect to displaying the gradient baseline and the calculated gradient line, the controller may display an angle between the gradient baseline and the calculated gradient line.

According to an exemplary embodiment, when power is supplied to the display apparatus which is supported by a holder, the controller may display a control menu on a screen, request gradient information of the display apparatus to a sensor in response to a user input input to the control menu, and display a gradient baseline along with a calculated gradient line on the screen of the display apparatus which is supported by the holder using the gradient information received from the sensor.

With respect to a broadcasting signal received over a wired or wireless connection, the tuner 120 may tune and select a frequency of a channel which the display apparatus wants to receive amplification, mixing, resonance, and the like.

The tuner 120 may receive an image, audio and data in a frequency range corresponding to a channel number (for example, channel number 14 of a cable broadcast) which corresponds to a user input (for example, an input through a remote controller, a user voice, a user's motion, or an input through a panel key).

The tuner 120 may receive a broadcasting signal from various sources, such as a terrestrial broadcast, a cable broadcast, a satellite broadcast, an internet broadcast, and the like. The tuner 120 may receive a broadcasting signal from a source, such as an analog broadcast, a digital broadcast, and the like. The tuner 120 may be realized as an internal component of the display apparatus 100, a separate apparatus (for example, a set-top box, with a tuner which is electrically connected to the display apparatus 100, a separate tuner which is connected to the external input 160, and the like.

The communicator 130 may connect the display apparatus 100 to an external apparatus (for example, a portable apparatus or a computer) by controlling the controller. The display apparatus 100 may download an application from an external apparatus which is connected through the communicator or perform web browsing by controlling the controller. The communicator 130 may include one or more of a wired Ethernet communicator 131, a wireless LAN communicator 132, a Bluetooth communicator 133 and a local area communicator (for example, near field communication (NFC), a Bluetooth low energy communicator (BLE)) corresponding to a function and a configuration of the display apparatus 100.

The microphone 140 receives sound vibrations, including those from a voice utterance of a user. The microphone 140 may convert a received voice to an electrical signal, and output to the controller. For example, the received voice may include a voice corresponding to a menu or a function of the display apparatus 100.

The microphone 140 may be included within the display apparatus 100 or as a separate component. The separated microphone 140 may be electrically connected to the display apparatus 100 through the communicator 130 or the external input 160.

The camera 145 may receive an image (for example, a successive frame) corresponding to a user's motion including a gesture in a camera recognition range. For example, a recognition range of the camera 145 represents a distance from the camera 145 to the user, and the recognition range of the camera 145 may be within 0.1 - 5 m. For example, the user motion may include a part of the user's body, such as a face, an expression, a hand, a fist and a finger, or a part of the user's motion. The controller 110 may control the camera 145 to convert an image received to an electrical signal, and may output to the controller 110.

The controller may analyze a received image (for example, a user motion) using a motion recognition algorithm, and output the result of motion recognition algorithm to a screen of the display apparatus 100. The controller may display the result of user motion recognition on a relative location of the screen corresponding to a location of the received user motion. The relative location represents that a location of a user motion (for example, the three-dimensional location or the two-dimensional location including a distance from the camera 145 to a user motion) received from the camera 145 is different from the location (the two-dimensional location displayed on the screen) of a user motion recognition result displayed on a screen. The controller may detect a distance where a user motion is received in the camera 145 using a time of flight (TOF) sensor technology, a structure light sensor technology, a stereo matching sensor technology and the like. The controller may display the result of user motion recognition on a screen considering a distance to the user motion.

The controller may select a menu displayed on the display apparatus 100 and perform a control corresponding to a motion recognition result using the outputted motion recognition result. For example, a channel control, a volume control and an indicator movement may be included.

The camera 145 may include a lens and an image sensor. The camera 145 may support one or more of an optical zoom and a digital zoom using a plurality of lenses and image processing. For example, a 5x optical zoom or a 20x digital zoom may be supported. A recognition range of the camera 145 may be set variously according to an angle of a camera and a background environment condition.

When there are a plurality of cameras 145, a three-dimensional still image or three-dimensional motion may be received using the second camera which adjoins (for example, a distance from the first camera 145 is larger than 2 cm, and smaller than 8 cm) the first camera 145 of the front cover 12.

The camera 145 may be integrated into the display apparatus 100, and also be separated from the display apparatus 100. An apparatus including the separated camera 145 may be electrically connected to the display apparatus 100 through the controller 130 or the external input 160.

The sensor 150 may include at least one sensor which detects a condition of the display apparatus 100. For example, the sensor 150 may include one or more of a gyro sensor which detects a rotational direction of the display apparatus 100 using a rotational inertia, an acceleration sensor which detects a gradient of three axes (for example, an x-axis, a y-axis, a z-axis) of the display apparatus 100 and a gravity sensor which detects a working direction of gravity.

At least one sensor included in the sensor 150 may detect a condition of the display apparatus 100, generate a signal corresponding to the detection, and transmit a signal to the controller. A sensor of the sensor 150 may be added or deleted according to a function of the portable apparatus 100.

A light receiver 155 receives a light signal from the external remote controller 200 through the light window 12A. For example, the light receiver 155 may receive a light signal (for example, a control signal corresponding to a power-on of the display apparatus 100) generated by a push or a touch of a key (for example, a power key) on the remote controller.

The external input 160 receives contents (for example, a video, a voice, music, data (for example, a playback instruction) and the like) from the outside of the display apparatus 100 by a control of the controller. The external input 160 may include one or more of a high-definition multimedia interface (HDMI) input port 161, a component input jack 162, a personal computer (PC) input port 163, and a universal serial bus (USB) input jack 164.

The display 170 displays an image included in a broadcasting signal received through the tuner 120 by a control of the controller. The display 170 may display an image (for example, a video) input through the communicator 130 or the external input 160. The display 170 may output an image stored in a storage 190, according to a control of the controller. Also, the display 170 may display a voice user interface (UI) (for example, a UI including a voice instruction guide) for performing a voice recognition task corresponding to a voice recognition or a motion UI (for example, a UI including a user motion guide for a motion recognition) for performing a motion recognition task corresponding to a motion recognition.

The audio outputter 175 outputs an audio included in a broadcasting signal received through the tuner 120 by a control of the controller. The audio outputter 175 may output an audio (for example, a voice, a sound) input through the communicator 130 or the external input 160. Also, the audio outputter 175 may output an audio stored in the storage 190 by a control of the controller. The audio controller 175 may include at least one among a speaker 176, a headphone output terminal 177, and S/PDIF output terminal 178.

The storage 180 may store various data, control menus, programs or applications to drive and control the display apparatus 100 by a control of the controller. The storage 180 may store an input/output signal or data corresponding to a drive of a tuner 120, a communicator 130, a microphone 140, a camera 145, the light receiver 155, the external input 160, the display 170, the audio outputter 145 and the power source 190. The storage 180 may store a control program for controlling the display apparatus 100 and the controller, an application which was initially provided by a manufacture or downloaded from the outside, a graphic user interface (GUI) related to an application, an object (for example, an image text, an icon, a button and the like) for providing a GUI, a user information, a document, a database or related data.

The term "storage" may include the storage 180, the ROM 112 of the controller, the RAM 113 and a memory card (for example, a micro SD card, a USB memory) equipped on the display apparatus 110. Also, the storage may include a non-volatile memory, a volatile memory, a hard disc drive (HDD), and a solid state drive (SSD).

The storage 180 may include a broadcasting reception module, a channel control module, a volume control module, a communication control module, a voice recognition module, a motion recognition module, a light reception module, a display control module, an audio control module, an external input control module, a power control module, a voice database (DB), and a motion database (DB). Modules and databases in the storage 180 may be realized as a software type for performing a control function of a broadcasting reception, a channel control function, a volume control function, a communication control function, a voice recognition function, a motion recognition function, a light reception control function, a display control function, an audio control function, an external input control function or a power control function. The controller may perform each of functions using the software stored in the storage 180.

The storage 180 may store the first gradient information received in the portable apparatus 100, according to a control of the controller.

The storage 180 may store the second gradient information of the display apparatus 200 which was calculated by using the first gradient information received in the portable apparatus 100, according to a control of the controller.

The storage 180 may store a calculated angle between a gradient baseline of the display apparatus 100 and a calculated gradient line using the second gradient information of the display apparatus 200, according to a control of the controller.

The storage 180 may store the third gradient information of the display apparatus 200 which is detected from the sensor 150 of the display apparatus 200, according to a control of the controller.

The power source 190 provides power input from an external power source to internal elements 120 to 190 of the display apparatus 100 by a control of the controller.

The portable apparatus 200 may include a controller 210, a communicator 220, a sensor 250, a storage 280 and/or a power source 290.

The controller 210 of the portable apparatus 200 may receive a gradient detection request from the display apparatus 100 through the communicator 220. Also, the controller 210 of the portable apparatus 200 may transmit one or more of gradient information detected in the display apparatus 100 and gradient information stored in the display apparatus 100 through the communicator 220.

The sensor 250 may detect a gradient of the portable apparatus 200. The sensor 250 may include one or more of an acceleration sensor, a motion sensor, a gyro sensor, a temperature sensor and so on.

The storage 280 may store a gradient of the portable apparatus 200 detected, according to the controller 210 as the first gradient information. The term "a storage of a portable apparatus" includes the storage 280, a ROM of the controller 210, a RAM or a memory card equipped on the portable apparatus 200 (for example, a micro SD card, a USB memory). Also, the storage may include a non-volatile memory, a volatile memory, a hard disc drive (HDD), and a solid state drive (SSD).

The power source 290 may provide power to an element of the portable apparatus 100, according to a control of the controller 210.

A computer 300 may remotely-control a plurality of the display apparatuses 100 by, for example, a direct LAN cable and a cross LAN cable using an RS232C cable and a hub. As an example, a remote control may include a power control, a volume control, a screen mode control, an input source control, an automatic screen adjustment control, and the like.

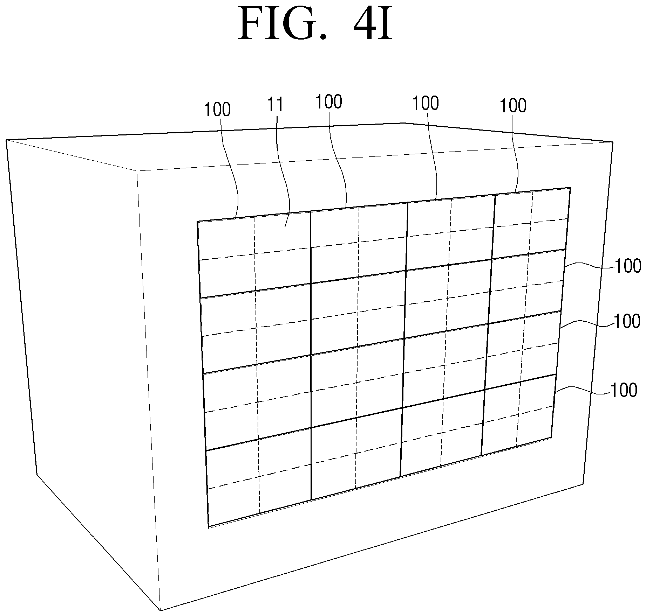

The computer 300 may control a plurality of display apparatuses connected by using an installed multi display control (MDC) application in the computer 300. For example, referring to FIG. 4I, the computer 300 may display a corrected result of a gradient of the display apparatus 100 arrayed in a 4 X 4 matrix using the MDC application.

With respect to elements (for example, 110 to 190) illustrated in the display apparatus 100 of FIGS. 1 and 2, at least one element may be added or deleted corresponding to a function of the display apparatus 100. Also, the location of various elements (for example, 110 to 190) may change corresponding to a function or a configuration of the display apparatus 100 as is easily understood by an ordinary person skilled in the relevant art.

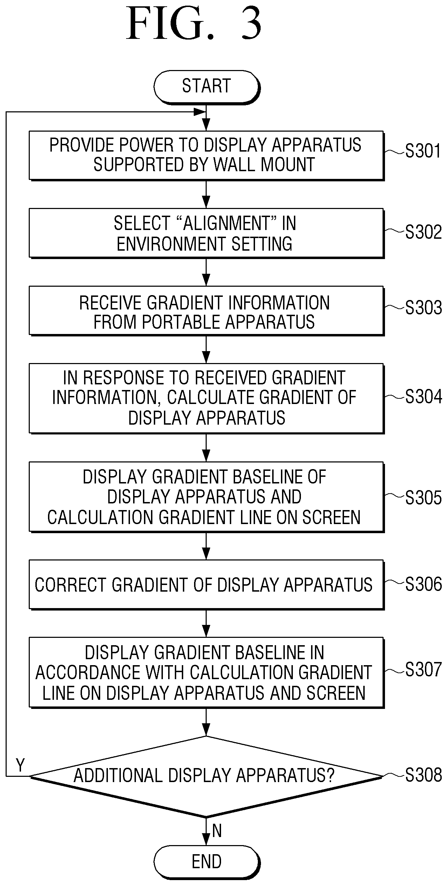

FIG. 3 is a flowchart illustrating a method for aligning the display apparatus, according to an exemplary embodiment.

FIGS. 4A to 4I are views illustrating an exemplary method for aligning the display apparatus, according to an exemplary embodiment.

Referring to FIG. 3, power is provided to the large format display apparatus (LFD) which is mounted to the wall mount (S301).

Referring to FIGS. 4A to 4B, one of a plurality of wall mounts 50 (for example, a plurality of wall mounts arrayed in a 4 X 4 matrix) installed on the wall and the display apparatus 100 are assembled. The display apparatus 100 may be mounted to the wall by assembling a coupling hole of a plurality of coupling holes 51A to 51 D of the wall mount and a coupling hole of the back cover 13 using a coupling member (for example, a screw, a rivet, a nut and the like). A power cable is connected to a power terminal of the back cover 13 of the display apparatus 100 which is mounted to the wall.

Through a power key 14A in the panel key 14 located on a part of the back cover 13 of the display apparatus 100, a user input (for example, a touch or a push) may be received. The controller provides power to the display apparatus in response to a received user input.

The controller may also provide power to the display apparatus 100 in response to an input through a power key of a control apparatus, a user voice received through a microphone, or a user motion received through a camera.

Referring to FIG. 3, an alignment may be selected in the environment setting (S302).

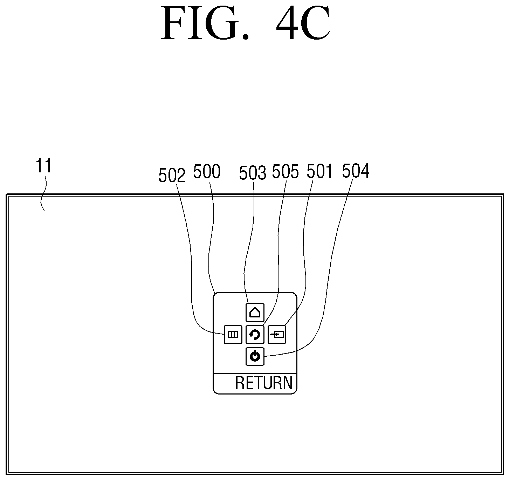

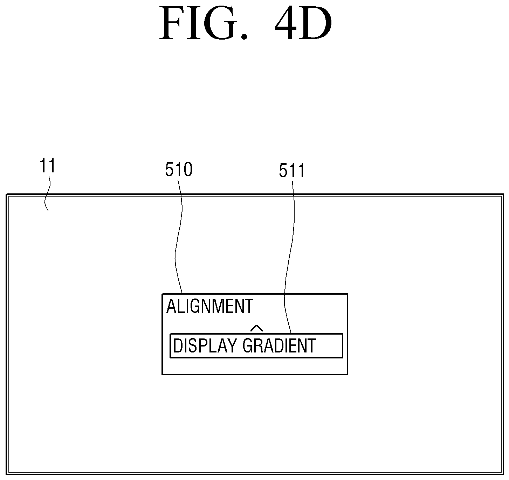

Referring to FIGS. 4C and 4D, when the power key 14A is selected, the controller displays a control menu 500 on the screen.

The control menu 500 includes one or more function icons 501 to 505. A function icon may include a TV/external source 501 which selects a connected external input, a menu 502 which sets an environment of the display apparatus 100, a home 503 which moves to a home, a return 505 which closes a control menu, and/or a power off 504.

When the menu 502 is selected, the controller displays a plurality of items for setting the display apparatus 100. A user input indicating an alignment 510 may be received from among a plurality of display items.

When the alignment 510 is selected, the controller may display a gradient display 511 for aligning the display apparatus 100. A user input is received in the displayed gradient display 511.

A controller according to another exemplary embodiment may selectively display an item according to an existence of the sensor of the display apparatus 100. For example, when the display apparatus 100 includes the sensor 150 and the portable apparatus 200, the user may select whether to use the sensor 150 of the display apparatus 100 (for example, the second mode) or whether to use the sensor 250 of the portable apparatus 200 (for example, the first mode).

The controller may receive gradient information through one or more of the sensor 150 of the display apparatus 100 and the sensor 250 of the portable apparatus 200.

When the display apparatus 100 does not include the sensor 150, and the portable apparatus 200 is nearby, the controller may request gradient information from the portable apparatus 200.

Referring to FIG. 3, the first gradient information may be received from a portable apparatus (S303).

The controller may search a portable apparatus 200 using a communicator 130. For example, a controller may search a portable apparatus 200 using at least one of a publicly known wireless LAN 132 and the Bluetooth 132. The controller may connect the searched portable apparatus 200 and the display apparatus 100 wirelessly.

The controller may request gradient information to the portable apparatus 200 on the front cover 12 of the inclined display apparatus 100 using the communicator.

As shown in FIG. 4E, portable apparatus 200 on the inclined display apparatus may execute an application (for example, a level application) corresponding to a request of the display apparatus 100 and detect the first gradient of the portable apparatus 200 using the sensor 250. In response to a request of the display apparatus 100, the portable apparatus 200 on the inclined display apparatus 100 may detect the first gradient of the portable apparatus 200 from an executing application (for example, a level application) using the sensor 250. Also, in response to a request of the display apparatus 100, the portable apparatus 200 on the inclined display apparatus 100 may search the first gradient information which is pre-stored in the storage 280.

The first gradient of the portable apparatus 200 on the flat front cover 12 may be substantially identical to the second gradient of the display apparatus 100.

The sensor 250 may detect an acceleration of the portable apparatus 200, generate an electrical signal, and transmit the generated electrical signal to the controller 210. For example, when the sensor 250 includes a triaxial acceleration sensor, the sensor 250 may detect the acceleration of gravity regarding the direction of X-axis, Y-axis, and Z-axis, as illustrated in FIG. 4E.

The sensor 250 may detect an acceleration where an acceleration of movement of the portable apparatus 200 and the acceleration of the gravity are added, and when there is no movement of the portable apparatus 200, only the acceleration of gravity may be detected. As an example, when the front of the portable apparatus faces up, the premise of the explanation is that the direction of the acceleration of gravity is in a positive sense, and when the back of the portable apparatus 200 faces up, the premise of the explanation is that the direction of the acceleration of gravity is in a negative sense.

When the back of the portable apparatus 200 is on the front cover 12, with respect to an acceleration of the gravity detected by the sensor 250, the value of an element of an X-axis and a Y-axis may be detected as 0 m/s², and only an element of a Z-axis may be detected as a specific value (for example, +9.8 m/s²). When a front of the portable apparatus 200 is on the front cover 12, with respect to an acceleration of gravity detected by the sensor 250, the value of an element of an X-axis and a Y-axis may be detected as 0 m/s², and only an element of a Z-axis may be detected as a specific value (for example, -9.8 m/s²).

Referring to FIG. 4E, when the portable apparatus 200 is placed obliquely, with respect to an acceleration of gravity detected by the sensor 250, at least one axis may be detected as a value other than 0 m/s², and the square root of sum of square of elements of three axes may be a specific value (for example, 9.8 m/s²).

The controller 210 may calculate the first gradient of the portable apparatus 200 using an acceleration of gravity of each axis received from the sensor 250. The first gradient may include a roll angle (ϕ), a pitch angle (θ) and/or a yaw angle (ψ).

The controller 210 may store the calculated first gradient (ϕ, θ, ψ) as the first gradient information in the storage 280. Also, the first gradient information may further include an identifier for managing history, and time the first gradient was detected. The roll angle (ϕ) represents an angle rotated based on an X-axis, the pitch angle (θ) represents an angle rotated based on a Y-axis, and the yaw angle (ψ) represents an angle rotated based on a Z-axis. The controller 210 may detect the first inclination of the portable apparatus 200 using the above-described method.

According to an exemplary embodiment, the controller 210 may calculate the first inclination of the portable apparatus 200 using an algorithm, such as the first inclination calculation algorithm using the Euler's angle, the first inclination calculation algorithm using the extended Kalman filter, an acceleration prediction switching algorithm, and the like. A method for calculating the first gradient of the portable apparatus 200 may be realized variously according to various sensors (for example, a gyro, a motion sensor and the like) in addition to an acceleration sensor.

In response to a request of the display apparatus 100, the portable apparatus 200 may transmit one or more of the first gradient information detected using the sensor and the pre-stored first gradient information to the display apparatus 100 through the communicator 220. Also, the portable apparatus 200 may transmit in real time or delay (for example, 1 second after detection) and then transmit one or more of the first gradient information detected using the sensor 250 and the pre-stored first gradient information to the display apparatus through the sensor 100 using the communicator 220. When the gradient information detected using the sensor 250 changes (for example, a change of gradient due to a correction of the gradient, and the like), the portable apparatus 200 may transmit the detected gradient information to the display apparatus 100 through the communicator 220.

When the display apparatus 100 is disconnected from the portable apparatus 200, the portable apparatus 200 may stop transmitting through the communicator 220.

The controller may receive the first gradient information from the portable apparatus 200 using the communicator 130. The controller may store the received first gradient information to the storage 180.

According to another exemplary embodiment, the controller may calculate a gradient of the display apparatus 100 by autonomously using the sensor 150 inside the display apparatus 100 independent of the sensor 250 of the portable apparatus 200. In this case, the communicator 130 of the display apparatus 100 and/or the communicator 220 of the portable apparatus 200 may not be necessary.

When the sensor 150 of the display apparatus 100 is a triaxial acceleration sensor, the controller may detect a triaxial gradient of the display apparatus 100 in a manner similar to the sensor unit 250 of the portable apparatus 200.

The controller may store a gradient detected through the sensor 150 of the display apparatus 100 in the storage as the third gradient information.

Referring to FIG. 3, in response to receiving the gradient information, a gradient of the display apparatus is calculated (S304).

The controller may calculated the second gradient (ϕ, θ, ψ) of the display apparatus 200 for displaying a gradient baseline and a calculated gradient line using the first gradient information of the received portable apparatus 100. The controller may calculate an angle between a gradient baseline of the display apparatus 100 and a calculated gradient line using the first gradient information. The controller may store the second gradient (ϕ, θ, ψ) of the display apparatus 200 in the storage 180 as the second gradient information. The second gradient information, which is stored, may further include an identifier for managing history or the second gradient calculating time. The second gradient (ϕ, θ, ψ) may have an error tolerance which is under ±0.1°.

According to another exemplary embodiment, the controller may apply the received first gradient information as a gradient of the display apparatus 200 as it is without a separate calculation process. The controller may display a gradient baseline and a calculated gradient line on the screen 11 using the first gradient information. In this case, the first gradient information may be substantially identical to the second gradient information.

Referring to FIG. 3, a gradient baseline of the display apparatus and a calculated gradient line are displayed on the screen (S305).

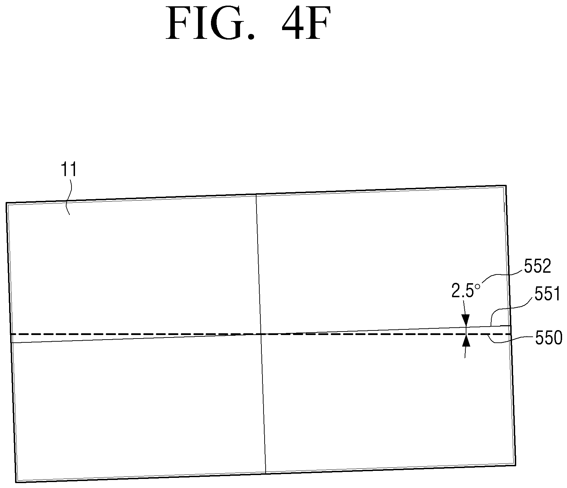

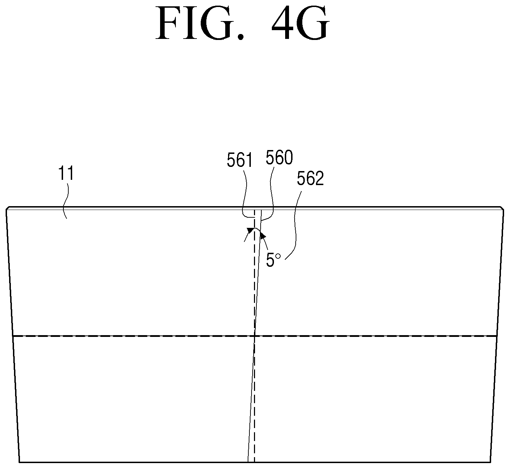

Referring to FIGS. 4F and 4G, the controller displays a base line 550, 560 along with a calculated gradient line 551, 561 on the screen 11 using the calculated second gradient information. A user may know a gradient of the display apparatus 100 through the displayed baseline 550, 560, and the calculated gradient line 551, 561. The displayed baseline 550, 560 and the calculated gradient line 551, 561 are distinguished by a different displayed line, for example a straight line and a dotted line, but may be distinguished and displayed by other various characteristics, including a color, a thickness, and the like.

The controller may display the base line 550, 560 and the calculated gradient line 551, 561, respectively, or may display both of the baseline 550, 560 and the calculated gradient line 551, 561 on a screen, as illustrated in FIGS. 4F and 4G.

The controller may further display an angle 552, 562 between the baseline 550, 560 and the calculated gradient line 551, 561 displayed on the screen 11.

Referring to FIG. 3, a gradient of the display apparatus is corrected (S306).

A user may correct a gradient of the display apparatus 100 using the baseline 550, 560 and the calculated gradient line 551, 561 displayed on the screen 11. The user may adjust a coupling member which couples the coupling holes 51A to 51D of the wall mount and the coupling holes of the back cover 13 by referencing the baseline 550, 560, and the calculated gradient line 551, 561. When gradient information is received in real time, or gradient information changes, the controller may display the received gradient information on the screen 11 of the display apparatus 100. The user may correct a gradient of the display apparatus 100 using a baseline and a calculated gradient line corresponding to updated gradient information displayed on the screen 11.

Referring to FIG. 3, a gradient baseline of the display apparatus is displayed in accord with a calculated gradient line (S307).

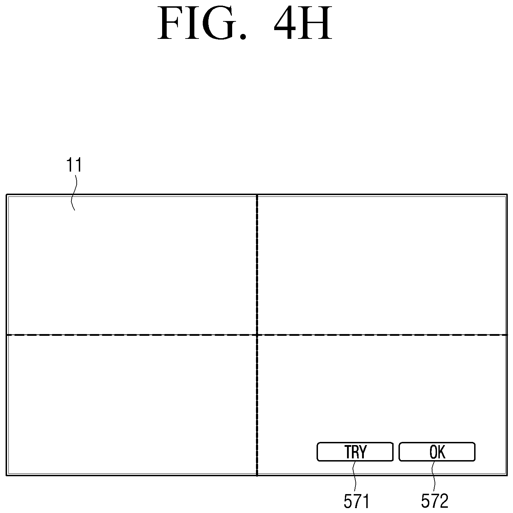

Referring to FIG. 4H, the controller may display the baseline 550, 560 in accord with the calculated gradient line 551, 561 in response to a gradient correction of the display apparatus 100 by a user. The display apparatus 100 is corrected to an X-axis, a Y-axis, and/or a Z-axis.

One of "try" 571 and "OK" 572 displayed on the screen may be selected by a user.

When "try" 571 is selected again, the process returns to step S303 of FIG. 3, and the display apparatus 100 may again receive gradient information from the portable apparatus 200.

Referring to FIG. 3, whether there is an additional display apparatus is determined (S308).

Referring to FIG. 3, when there is an additional display apparatus, the step of S308 proceeds to the step of S301.

The gradient correction process illustrated in FIG. 3, from the step of S301 to the step of S307, may be repeated for each of the display apparatuses 100 arrayed in a 4 X 4 matrix. Referring to FIG. 4I, a result of a gradient correction of the display apparatus 100 arrayed in a 4 X 4 matrix is illustrated. The display apparatus 100 arrayed in a 4 X 4 matrix is corrected to be in an X-axis, a Y-axis, and/or a Z axis.

When an angle of the display apparatus has been corrected with regard to an X-axis, a Y-axis and/or a Z-axis for each of the display apparatus 100 arrayed in a 4 X 4 matrix, the method for aligning the display apparatus ends.

An embodiment might also relate to a user terminal device and a display method thereof. A user terminal device may include a display configured to display an e-book content, a bezel configured to house the display, the first touch detector configured to detect a user interaction input to the display, the second touch detector configured to detect a user interaction input to the bezel, and a controller configured to in response to detecting a user interaction on at least one side of the bezel through the second touch detector, control a display of the e-book content corresponding to a type of the user interaction and the number of sides where the user interaction is detected.

Methods according to exemplary embodiments may be implemented in the form of a program executable through various computing means and may be recorded on a computer-readable medium. The computer-readable medium may include a program command, a data file, and a data separate structure, or a combination thereof. For example, the computer-readable medium may be stored in a volatile or non-volatile storage device, such as a ROM, a memory, such as a RAM, a memory chip, a device, or an integrated chip, or a storage medium which can record optically or magnetically and also is readable by a device (for example, a computer), such as a CD, a DVD, a magnetic disk, or a magnetic tape, regardless of whether it is deletable or re-recordable. A memory included in a mobile terminal is an example of a computer-readable storage medium suitable for storing a program or programs including instructions for implementing the exemplary embodiments. The program recorded on the medium may be specially designed and configured for the present disclosure or may be well known to an ordinary skilled person in the computer software field and usable.

Although a few preferred embodiments have been shown and described, it will be appreciated by those skilled in the art that various changes and modifications might be made without departing from the scope of the invention, as defined in the appended claims.

## Claims

1. A method for aligning a display apparatus, comprising:
displaying a control menu on a screen of a display apparatus (S302);
requesting first gradient information from a portable apparatus in response to a user input corresponding to the control menu (S303); and
displaying a gradient base line and a determined gradient line on the screen of the display apparatus (S305),
wherein the determined gradient line is determined using the first gradient information received from the portable apparatus (S304).

2. The method as claimed in claim 1, wherein the portable apparatus is placed on a surface of the display apparatus and the first gradient information is substantially identical to a gradient of the display apparatus.

3. The method as claimed in claim 1 or 2, wherein displaying the gradient baseline and the determined gradient line comprises:
determining a gradient of the display apparatus using the first gradient information; and
determining an angle between the gradient base line of the display apparatus and the gradient line of the display apparatus.

4. The method as claimed in any one of claims 1 to 3, wherein displaying the gradient baseline and the determined gradient line comprises displaying an angle between the gradient line of the display apparatus and the determined gradient line.

5. The method as claimed in any one of claims 1 to 4, wherein the user input includes one or more of an input through an external remote controller, a user voice received to a microphone, a user motion received to a camera and an input by a panel key.

6. The method as claimed in any one of claims 1 to 5, wherein the display apparatus is arrayed in an M X N matrix, and a side of the front cover of the display apparatus contacts another display apparatus,
wherein M and N are positive integers.

7. The method as claimed in any one of claims 1 to 6, further comprising displaying the control menu on the screen in response to providing power to the display apparatus.

8. A display apparatus (100), the display apparatus comprising:
a display (170),
a communicator (130) configured to communicate with a portable apparatus (200); and
a controller (110) configured to control the display and the communicator,
wherein the controller is configured to control the communicator, in response to a user input, request first gradient information from the portable device,
and configured to control the display to display a gradient baseline and a determined gradient line of the display apparatus on the display using the first gradient information.

9. The display apparatus as claimed in claim 8, wherein the controller is further configured to search for the portable apparatus.

10. The display apparatus as claimed in claim 8 or 9, further comprising a sensor,
wherein the controller is further configured to receive the first gradient information from the sensor or from a storage of the portable apparatus.

## Patentansprüche

1. Verfahren zum Ausrichten einer Anzeigevorrichtung, das Folgendes umfasst:
Anzeigen eines Steuermenüs auf einem Bildschirm einer Anzeigevorrichtung (S302);
Abfragen erster Gradienteninformationen von einer tragbaren Vorrichtung als Reaktion auf eine Anwendereingabe, die dem Steuermenü (S303) entspricht; und
Anzeigen einer Gradientengrundlinie und einer bestimmten Gradientenlinie auf dem Bildschirm der Anzeigevorrichtung (S305),
wobei die bestimmte Gradientenlinie unter Verwendung der von der tragbaren Vorrichtung empfangenen ersten Gradienteninformationen bestimmt wird (S304).

2. Verfahren nach Anspruch 1, wobei die tragbare Vorrichtung auf einer Fläche der Anzeigevorrichtung positioniert ist und die ersten Gradienteninformationen im Wesentlichen mit einem Gradienten der Anzeigevorrichtung identisch sind.

3. Verfahren nach Anspruch 1 oder 2, wobei das Anzeigen der Gradientengrundlinie und der bestimmen Gradientenlinie Folgendes umfasst:
Bestimmen eines Gradienten der Anzeigevorrichtung unter Verwendung der ersten Gradienteninformationen; und
Bestimmen eines Winkels zwischen der Gradientengrundlinie der Anzeigevorrichtung und der Gradientenlinie der Anzeigevorrichtung.

4. Verfahren nach einem der Ansprüche 1 bis 3, wobei das Anzeigen der Gradientengrundlinie und der bestimmten Gradientenlinie umfasst, einen Winkel zwischen der Gradientenlinie der Anzeigevorrichtung und der bestimmten Gradientenlinie anzuzeigen.

5. Verfahren nach einem der Ansprüche 1 bis 4, wobei die Anwendereingabe eine Eingabe durch eine externe Fernsteuereinheit und/oder eine an einem Mikrofon empfangene Anwenderstimme und/oder eine an einer Kamera empfangene Anwenderbewegung und/oder eine Eingabe durch eine Feldtaste enthält.

6. Verfahren nach einem der Ansprüche 1 bis 5, wobei die Anzeigevorrichtung in einer M×N-Matrix angeordnet ist und eine Seite der vorderen Abdeckung der Anzeigevorrichtung eine weitere Anzeigevorrichtung berührt,
wobei M und N positive ganze Zahlen sind.

7. Verfahren nach einem der Ansprüche 1 bis 6, das ferner umfasst, das Steuermenü auf dem Bildschirm als Reaktion auf das Liefern von Strom an die Anzeigevorrichtung anzuzeigen.

8. Anzeigevorrichtung (100), wobei die Anzeigevorrichtung Folgendes umfasst:
eine Anzeige (170),
eine Kommunikationseinrichtung (130), die konfiguriert ist, mit einer tragbaren Vorrichtung (200) zu kommunizieren; und
eine Steuereinheit (110), die konfiguriert ist, die Anzeige und die Kommunikationseinrichtung zu steuern,
wobei die Steuereinheit konfiguriert ist, die Kommunikationseinrichtung als Reaktion auf eine Anwendereingabe zu steuern, erste Gradienteninformationen von der tragbaren Vorrichtung abzufragen,
und konfiguriert ist, die Anzeige zu steuern, eine Gradientengrundlinie und eine bestimmte Gradientenlinie der Anzeigevorrichtung unter Verwendung der ersten Gradienteninformationen auf der Anzeige anzuzeigen.

9. Anzeigevorrichtung nach Anspruch 8, wobei die Steuereinheit ferner konfiguriert ist, nach der tragbaren Vorrichtung zu suchen.

10. Anzeigevorrichtung nach Anspruch 8 oder 9, die ferner einen Sensor umfasst,
wobei die Steuereinheit ferner konfiguriert ist, die ersten Gradienteninformationen von dem Sensor oder von einem Speicher der tragbaren Vorrichtung zu empfangen.

## Revendications

1. Procédé d'alignement d'un appareil d'affichage, comprenant les étapes suivantes :
afficher un menu de contrôle sur un écran d'un appareil d'affichage (S302) ;
demander des premières informations d'inclinaison auprès d'un appareil portable en réponse à une entrée d'utilisateur correspondant au menu de contrôle (S303) ; et
afficher une ligne de base d'inclinaison et une ligne d'inclinaison déterminée sur l'écran de l'appareil d'affichage (S305),
dans lequel la ligne d'inclinaison déterminée est déterminée en utilisant les premières informations d'inclinaison reçues depuis l'appareil portable (S304).

2. Procédé selon la revendication 1, dans lequel l'appareil portable est placé sur une surface de l'appareil d'affichage et les premières informations d'inclinaison sont sensiblement identiques à une inclinaison de l'appareil d'affichage.

3. Procédé selon la revendication 1 ou 2, dans lequel l'affichage de la ligne de base d'inclinaison et de la ligne d'inclinaison déterminée comprend les étapes suivantes :
déterminer une inclinaison de l'appareil d'affichage en utilisant les premières informations d'inclinaison ; et
déterminer un angle entre la ligne de base d'inclinaison de l'appareil d'affichage et la ligne d'inclinaison de l'appareil d'affichage.

4. Procédé selon l'une quelconque des revendications 1 à 3, dans lequel l'affichage de la ligne de base d'inclinaison et de la ligne d'inclinaison déterminée comprend l'affichage d'un angle entre la ligne d'inclinaison de l'appareil d'affichage et la ligne d'inclinaison déterminée.

5. Procédé selon l'une quelconque des revendications 1 à 4, dans lequel l'entrée d'utilisateur comporte un ou plusieurs éléments parmi une entrée par un contrôleur externe distant, une voix d'utilisateur reçue sur un microphone, un mouvement d'utilisateur reçu sur une caméra et une saisie par une touche de panneau.

6. Procédé selon l'une quelconque des revendications 1 à 5, dans lequel l'appareil d'affichage est agencé en une matrice M x N, et un côté du capot avant de l'appareil d'affichage touche un autre appareil d'affichage,
M et N étant des entiers positifs.

7. Procédé selon l'une quelconque des revendications 1 à 6, comprenant en outre l'affichage du menu de contrôle sur l'écran en réponse à l'alimentation de l'appareil d'affichage.

8. Appareil d'affichage (100), l'appareil d'affichage comprenant :
un écran d'affichage (170) ;
un dispositif de communication (130) configuré pour communiquer avec un appareil portable (200) ; et
un contrôleur (110) configuré pour contrôler l'écran d'affichage et le dispositif de communication,
le contrôleur étant configuré pour contrôler le dispositif de communication, en réponse à une entrée d'utilisateur, afin de demander des premières informations d'inclinaison auprès du dispositif portable,
et configuré pour contrôler l'écran d'affichage afin d'afficher une ligne de base d'inclinaison et une ligne d'inclinaison déterminée de l'appareil d'affichage sur l'écran d'affichage en utilisant les premières informations d'inclinaison.

9. Appareil d'affichage selon la revendication 8, dans lequel le contrôleur est également configuré pour rechercher l'appareil portable.

10. Appareil d'affichage selon la revendication 8 ou 9, comprenant en outre un capteur,
le contrôleur étant également configuré pour recevoir les premières informations d'inclinaison depuis le capteur ou depuis un stockage de l'appareil portable.
